# EUROPEAN PATENT APPLICATION

(11) **EP 4 282 695 A1**
(43) Date of publication of application: **29.11.2023**
(21) Application number: 23175214.8
(22) Date of filing: 25.05.2023
(51) Int. Cl.: B60L 53/62, B60L 53/66, B60L 53/67, B60L 53/68, B60L 58/12, B60L 58/24, B60L 58/26, B60L 58/27

(54) **METHOD AND APPARATUS FOR PROVIDING A CHARGING TIME WINDOW FOR AN ELECTRIC VEHICLE**

(30) Priority: 26.05.2022 US 202217825843
(71) Applicant: HERE Global B.V., 5611 ZT Eindhoven (NL)
(72) Inventor: Tuukkanen, Marko Tapio, 10115 Berlin (DE)
(74) Representative: Cohausz & Florack

(57) **Abstract**

An approach is provided for providing a charging time window for an electric vehicle based on environmental conditions at a charge point. The approach involves receiving a request to charge a battery of an electric vehicle at a charge point. The approach also involves determining a battery temperature operating range for the battery. The approach further involves determining a battery temperature function that predicts a temperature of the battery based on an environmental condition at the charge point. The approach further involves determining a charging time window for charging the battery based on the battery operating range and the battery temperature function. The approach further involves outputting the charging time window. The approach can involve determining a temperature regulating time period for the battery and/or the charge point to cool down or heat up before charging based on the battery temperature and/or the environmental condition at the charge point.

## Description

### BACKGROUND

There is an increasing number of electric vehicles. One area of development has been with respect to weather-aware navigation and charging strategies. Charging electric vehicles is influenced by weather. For instance, the vehicle batteries require heating to reach an optimal operating temperature for charging in cold weather, which consumes electricity in exchange for optimal charging efficiency. On the hand, in hot weather, vehicle batteries must be cooled down or charging interrupted until an optimal charging temperature range is reached. Non-optimal charging of vehicles can increase the electricity grid load, the amount of electricity wasted, and the costs for the end customers. However, the existing approaches roughly estimate the battery temperatures based on local weather for all charge points in the area without considering the different environmental conditions at each charge point that can affect battery temperatures. Accordingly, service providers and manufacturers for electric vehicles face significant technical challenges to consider such environmental conditions at different charge points.

### SOME EXAMPLE EMBODIMENTS

Therefore, there is need for an approach for providing a charging time window for an electric vehicle based on environmental conditions at a charge point (i.e., a granularity level of a charge point) that can affect battery temperatures.

According to one embodiment, a method comprises receiving a request to charge a battery of an electric vehicle at a charge point. The method also comprises determining a battery temperature operating range for the battery. The method further comprises determining a battery temperature function that predicts a battery temperature of the battery based on an environmental condition at the charge point. The method further comprises determining a charging time window for charging the battery based on the battery operating range and the battery temperature function. The method further comprises providing the charging time window as an output.

According to another embodiment, an apparatus comprises at least one processor, and at least one memory including computer program code for one or more computer programs, the at least one memory and the computer program code configured to, with the at least one processor, cause, at least in part, the apparatus to receive a request to charge a battery of an electric vehicle at a charge point. The apparatus is also caused to determine a battery temperature operating range for the battery. The apparatus is further caused to determine a battery temperature function that predicts a battery temperature of the battery based on an environmental condition at the charge point. The apparatus is further caused to determine a charging time window for charging the battery based on the battery operating range and the battery temperature function. The apparatus is further caused to provide the charging time window as an output.

According to another embodiment, a computer program product may be provided. For example, a computer program product comprising instructions which, when the program is executed by a computer, cause the computer to receive a request to charge a battery of an electric vehicle at a charge point. The computer is also caused to determine a battery temperature operating range for the battery. The computer is further caused to determine a battery temperature function that predicts a battery temperature of the battery based on an environmental condition at the charge point. The computer is further caused to determine a charging time window for charging the battery based on the battery operating range and the battery temperature function. The computer is further caused to provide the charging time window as an output.

According to another embodiment, a non-transitory computer-readable storage medium carries one or more sequences of one or more instructions which, when executed by one or more processors, cause, at least in part, an apparatus to receive a request to charge a battery of an electric vehicle at a charge point. The apparatus is also caused to determine a battery temperature operating range for the battery. The apparatus is further caused to determine a battery temperature function that predicts a battery temperature of the battery based on an environmental condition at the charge point. The apparatus is further caused to determine a charging time window for charging the battery based on the battery operating range and the battery temperature function. The apparatus is further caused to provide the charging time window as an output.

According to another embodiment, an apparatus comprises means for receiving a request to charge a battery of an electric vehicle at a charge point. The apparatus also comprises means for determining a battery temperature operating range for the battery. The apparatus further comprises means for determining a battery temperature function that predicts a battery temperature of the battery based on an environmental condition at the charge point. The apparatus further comprises means for determining a charging time window for charging the battery based on the battery operating range and the battery temperature function. The apparatus further comprises means for providing the charging time window as an output.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing a charging time window for an electric vehicle based on environmental conditions at a charge point, according to example embodiment(s);
FIG. 2 a ladder diagram for optimizing an electric vehicle charging time window, according to example embodiment(s);
FIG. 3 is a diagram of the components of a vehicle charging platform, according to example embodiment(s);
FIG. 4 is a flowchart of a process for providing a charging time window for an electric vehicle based on environmental conditions at a charge point, according to example embodiment(s);
FIG. 5 are a diagram of images of example charge points, according to example embodiment(s);
FIG. 6A is a diagram of available power of a generic lithium-ion battery in an electric car under various operation temperatures, according to example embodiment(s);
FIG. 6B is a diagram of available power of a generic lithium-ion battery in an electric car under various charging temperatures, according to example embodiment(s);
FIGs. 7A-7B are temperature versus time diagrams at a given location within a battery pack, according to example embodiment(s);
FIGs. 8A-8E are diagrams of example user interfaces for providing a charging time window for an electric vehicle based on environmental conditions at a charge point, according to example embodiment(s);
FIG. 9 is a diagram of a geographic database, according to example embodiment(s);
FIG. 10 is a diagram of hardware that can be used to implement an embodiment of the invention, according to example embodiment(s).
FIG. 11 is a diagram of a chip set that can be used to implement an embodiment of the invention, according to example embodiment(s).
FIG. 12 is a diagram of a mobile terminal (e.g., handset) that can be used to implement an embodiment of the invention.

### DESCRIPTION OF SOME EMBODIMENTS

Examples of a method, apparatus, and computer program for providing a charging time window for an electric vehicle based on environmental conditions at a charge point are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

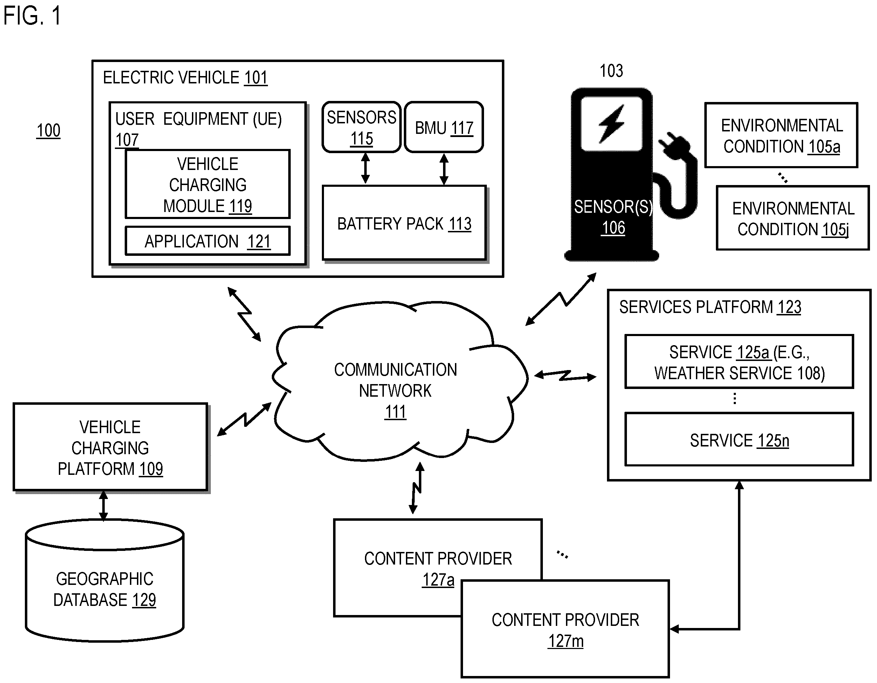

FIG. 1 is a diagram of a system capable of providing a charging time window for an electric vehicle based on environmental conditions at a charge point, according to example embodiment(s). As noted above, electric vehicles are becoming common which leads to a high demand of electricity, while charging efficiency of electric vehicles depends on the weather conditions, especially to the surrounding temperature. Extreme temperatures (such as below 32°F (0°C) or above 86°F (30°C)) affect not only battery performance, but also battery charging efficiency. The colder the weather, the longer it takes to charge an electric vehicle. Some vehicle manufacturers have introduced a battery heating function for cold weather. The temperatures of electric vehicles and/or their batteries can be "pre-conditioned" to an optimal range before charging, which will help preserve charging efficiency whether all-electric vehicles or plug-in hybrid electric vehicles (PHEVs).

By way of example, a power management system of a pure electric vehicle powered exclusively by batteries include: a battery system, a control and power logic unit, a traction system, an auxiliary system, a driver's control panel, and a cooling/heating system, that are interconnected by buses. The battery system has one or more battery packs monitored by a battery monitoring system (BMS) module. The BMS checks whether the voltages at the output of the batteries are the same as the input of an inverter and manages the use of the battery banks, by operating the battery packs depending on the load conditions of each pack. The BMS coordinates the control and power logic unit which, through its components, controls the flow of energy between the battery packs, the traction system and the auxiliary system. The cooling/heating system is a thermal management system (TMS) to extend the life of the battery packs. Cooling the battery packs while fast charging and on hot days, and warming the battery packs up on cold days or to prepare for fast charging. The TMS works with the BMS as a battery monitoring unit (BMU) 117 to create optimal battery conditions.

This pre-conditioning consumes electricity in addition to the charging. However, applying the same weather temperature as the estimated ambient temperature across all charge points in the area for pre-conditioning will not result in the optimal battery temperature range, since different environmental conditions 105a-105j (e.g., indoor/outdoor, roofed, sun exposure, wind exposure, etc., hereinafter environmental conditions 105) at each charge point can affect vehicle/battery temperatures. For instance, a charge point in an charging garage may be warm enough in cold weather such that it doesn't require pre-conditioning the electric vehicle 101. As another instance, a charge point in a carport attached to a wall can shield the electric vehicle 101 from direct sun light in hot weather such that it doesn't require pre-conditioning the electric vehicle 101.

To address these scenarios, a system 100 of FIG. 1 introduces the capability of providing providing a charging time window for an electric vehicle based on environmental conditions at a charge point, according to example embodiment(s). For example, in one embodiment, the system 100 can determine the best time window to start charging an electric vehicle 101 based on the location and characteristics (e.g., battery pack model/design/placement, battery temp/temp operating range/temperature function, vehicle model/design, etc.) of the vehicle 101, the locations and characteristics (e.g., environmental conditions, a charging efficiency score/parameter, etc.) of nearby and/or en route charge points 103, mobility graph of the vehicle 101 and/or a user of the vehicle 101, characteristics of the electricity grid, local weather, etc., to determine the best time window to start charging of the vehicle 101 to optimize electricity consumption. The system 100 can then make recommendations of the best time window and/or a respective charge point to electric vehicles and/or users regarding vehicle charging optimization, environmental impacts, and/or costs.

As used herein, the term battery temperature function refers to that is generated based on experiments, heuristics or machine learning to predict a battery temperature of the battery based on environmental condition(s) at a charge point. Although the electric vehicles described are electric automobiles, it is contemplated that the approaches of the various embodiments described herein are applicable to any type of electric vehicle, such as electric buses, electric trucks, e-scooters, electric bikes, etc.

Although various embodiments are described with respect to an electric vehicle, it is contemplated that the approaches of the various embodiments described herein are applicable to autonomous vehicles and/or highly-assisted driving (HAD) vehicles as well as to vehicles for which a charging time window can be determined and/or recommended. In addition, although various embodiments are described with respect to heating as pre-conditioning an electric vehicle for charging, it is contemplated that the approaches of the various embodiments described herein are applicable to cooling as pre-conditioning. Moreover, although various embodiments are described with respect to pre-conditioning the battery pack of an electric vehicle before charging the battery pack, it is contemplated that the approaches of the various embodiments described herein are applicable to pre-conditioning a charge point.

For instance, the locations and characteristics of charge points 103 can be reported by the respective owners/operators, crowd-sourced from end users (via user equipment (LTE) 107) and/or the vehicle 101 that visit the charge points 103, recorded in government agencies databases during permitting processes, etc.

In one embodiment, the system 100 can store the locations and characteristics of charge points 103 in a geographic database for sharing. For instance, the system 100 can store the locations and characteristics of charge points 103 in a charge point map layer for faster retrieval and applications.

In one embodiment, the system 100 can determine/predict the situations where the charge point needs to pre-condition/optimize (e.g., heated up or cooled down) for and optimal battery charging and user-friendly experience. For instance, the system 100 can determine/predict a time window when the charge point has recently been used thus likely to be close to optimal conditions at the time when the user in the electric vehicle arrives at this specific charge point.

As other instances, a charge point needs to be heated up before it can be used, or before the charging can start, or before the charging becomes optimal. For example, in a cold country like Norway, if the charge point was just used, after disconnecting a charged electric vehicle the charge point is still at or close to having optimal conditions. This charge point does not require as much heating as another charge point that was used last time yesterday. Heating charge points increases the costs for the provider of the charge points and/or the power grid, and it affects customer relationship to bill customers for heating up a charger that is part of the infrastructure. Therefore, the system 100 can optimize pre-conditioning of charge points.

The system 100 can use sensors at charge points to provide information of the characteristics of charge points, environmental condition(s) such as the weather at their locations, etc. For instance, heavy air moisture plus cold weather can freeze a charging cable, such that heating required prior to connecting the charger to the electric vehicle that is about to arrive at the charge point. In addition, the actual electronics within a charge point can suffer from heat or cold weather, thus need time to warm up or cool down. The sensors can also provide information about the conditions of the electronics within a charge point. Based on real time sensor data and weather data, the system 100 can optimize charge points in connection with the vehicle battery packs. For instance, the system 100 can direct an electric vehicle to a charge point where the weather conditions are optimal and where the conditions of the charge point itself are also optimal. In some cases, there can be compromises, for example, the weather at the charge point location not optimal for EV battery packs, yet the conditions of the charge point itself is good enough to make that that charge point optimal during a specific charging time window.

In another embodiment, the system 100 can use current and predicted weather information in connection with the location and other vehicle/user related information to determine (1) a temperature regulating time period for pre-conditioning the battery and/or the charge point before charging the battery pack based on the battery temperature, the environmental condition at the charge point, or a combination thereof, and/or (2) the best time window to charge the electric vehicle 101, to ensure optimal charging conditions for one or more vehicles, as well as to optimize the electricity consumption over the electricity grid. For instance, the system 100 can consider the current EV battery levels, planned use of the EV(s), required battery capacity and range, the current EV battery temperature, optimal temperature for charging, current and predicted weather and ambient temperatures, alternative charge points with better or optimal weather and ambient temperature conditions, the network load at a given moment, etc., thereby optimizing the beginning and end of a charging window for one or more electric vehicles. For instance, the network load at a given moment can be balanced to support a plurality of charge points connected to a particular section of the power grid, e.g., the same transformer, a set of transformers, a sub-station, a power station, etc. by handling concurrent charge requests, such that the system 100 can allocate time windows to the charge points to avoid overloading or consuming a maximum available power for that particular section of the power grid.

Besides temperature, the system 100 can also consider humidity that can impact battery/charge point pre-conditioning, and battery charging as well. Moisture will impact temperature 15-20C degree, how fast to cool or heat up the battery pack and/or the charge point. Also, wind speed can dissipate heat/cold faster, ground temperature can cool down the air. The system 100 can also factor in other environmental conditions 105 such as sun light, building, tree, etc. at the granularity level of a charge point, when applying weather data (e.g., in Norway, more wind form the ocean than the mountains), mapping data (e.g., 3D model of the building offering protection from snow, direct sunlight, etc.). As weather changes via seasons, the system 100 can select charge point locations for different seasons.

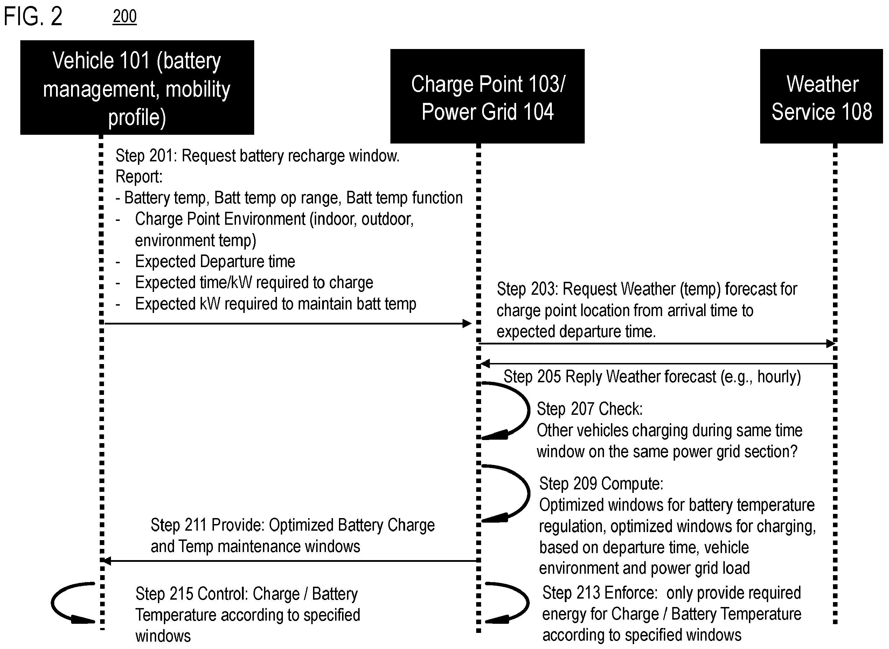

In another embodiment, the system 100 can support an electricity grid operator to remotely and/or centrally control charging one or more electric vehicles, thereby reducing the overall electricity consumption in a grid area. For instance, from an electricity grid perspective, to centrally control charging electric vehicles can increase total charging efficiency by, e.g., 10-15%. FIG. 2 a ladder diagram 200 for optimizing an electric vehicle charging time window, according to example embodiment(s). The ladder diagram 200 starts from a vehicle 101 requesting the system 100 for a battery charging/temperature management window while connected (e.g., plugged, induction charging, etc.) to a power grid 104 in step 201. In this case, the system 100 can reside in the cloud or the power grid 104, or the charge point 103.

Since EV charging efficiency is influenced by battery temperatures, the current and predicted weather information as well as charge point environmental conditions 105 can be used in connection with the location and other vehicle/user characteristic information to determine the best time window to charge the electric vehicle 101 and ensure the optimal charging conditions for a number of vehicles thereby optimizing the electricity consumption and the power grid load.

When the electric vehicle 101 requests an optimized charging window, the vehicle 101 can report an expected departure time (e.g., based on collected mobility patterns of the user(s) while using the vehicle, calendar entries associated with the user(s), public transport disturbances, other events that would encourage vehicle use, etc.) during the same step 201, for the system 100 to determine the best time window.

In one embodiment, the electric vehicle 101 can also report the current battery status (e.g., charged %), current environment conditions (e.g., weather, indoor location, roofed location, outdoor location, sun exposure, wind chill, etc. at the charge point 103) as well as a battery temperature profile/function that predicts the battery temperature depending on the environmental conditions. In another embodiment, such battery temperature function/profile can also be communicated by reference (e.g., with an URL or an index), without being included in every request. Some environmental conditions at the charge point 103 may be collected directly from/associated with the charge point 103. For instance, the charge point 103 has sensor(s) 106 (e.g., temperature sensor(s), humidity sensor(s), luminosity sensor(s)), and/or is labelled as indoors/outdoors/roofed/exposed, etc. As another instance, the charge point 103 has other sensors that can determine a status of the charge point 103 as available, occupied, out-of-service, or unknown. As another instance, the charge point 103 has other sensors that can determine its charging speed as fast, medium fast, medium, slow, unknown.

In one embodiment, the system 100 can estimate/extrapolate battery temperature data based on the weather data at the charge point 103. Such an estimate may not be as precise as measured battery temperature data and thus affect charging efficiency, yet still allows for setting up a charging time window (e.g., 20 minutes during lunch time or night time) in absence of vehicle-specific data. In another embodiment, the system 100 can estimate/extrapolate battery temperature data based on environmental conditions 105 present at the charge point, which can be more precise and charge-point-specific.

In another embodiment, the request in the step 201 can also include an expected time/kilowatts required to charge, and an expected watt or kilowatt requirement for maintaining temperature (optional, as the watt or kilowatt requirement for maintaining temperature is far lower than during actual charging).

In another embodiment, the request in the step 201 can also include a current State of Charge (SoC), an expected required range until next charge opportunity, next charge point on route (for longer routes), etc.

Then after, the system 100 (e.g., residing at the charge point 103 as a part of the power grid 104) can query a weather service 108 for relevant weather forecast data at the charge point location in step 203 The weather service 108 can reply weather forecast in response to the query or periodically (e.g., hourly) in step 205.

The system 100 can assess if other vehicles are connected on the same power grid/section in step 207, compute an optimal charging time windows for individual vehicles based on departure time, vehicle environment conditions, a power grid load, etc. in step 209, and then provide the optimal charging time windows to the individual vehicles in step 211. The vehicles may charge according to the provided time windows in step 213, while the charge point 103 may enforce these windows by providing energy to the respective vehicles only during the specified windows in step 215. For instance, the system 100 can further specify that the charge point may selectively deliver kilowatts (or watts) sufficient to perform battery temperature maintenance functions for the respective vehicles and/or to deliver the full kilowatts for charging respective battery packs of the vehicles.

In short, the system 100 can determine a charge point and/or a charging time window based on the location/characteristics of the vehicle 101, the locations/characteristics (e.g., environmental conditions, a charging efficiency score/parameter, etc.) of nearby and/or en route charge points 103, mobility graph of the vehicle 101 and/or a user of the vehicle 101, characteristics of the electricity grid, local weather, etc. as in the above-discussed embodiments. In one embodiment, the system 100 can deliberately plan charge point(s) and/or charging time window(s) for a user's trip of multiple stops (e.g., visiting customers like a traveling salesman problem (TSP), sight-seeing, etc.) en route, or for a plurality of electric vehicles (e.g., one or more vehicle fleets in large scale vehicle routing). The TSP is an NP-hard problem in combinatorial optimization. A Large-Scale Vehicle Routing Problem (LSVRP) is also classified as an NP-hard problem since it requires sophisticated methods to be solved due to the sheer amount of customers. In case that the user/fleet changes trip plan(s) on demand, the system 100 can dynamically update the remaining charge point(s) and/or charging time window(s) for the user/fleet.

As shown in FIG. 1, in one embodiment, the electric vehicle 101, the LTE 107, and/or the charge point 103 has connectivity to a vehicle charging platform 109 over a communication network 111. By way of example, the vehicle charging platform 109 is a network component that can perform all or a portion of the functions of the charge point 103 which is a component of the power grid 104.

Although the UE 107 is depicted as built-in or carried by the electric vehicle 101, the LTE 107 can be a separate component from the electric vehicle 101 (e.g., a mobile device associated with the vehicle 101 via a vehicle charging module 119 and/or an application 121). It is contemplated that the functions of the LTE 107 and/or the charge point 103 may be performed or embedded in the electric vehicle 101 or a built-in component of the electric vehicle 101. As shown, the electric vehicle 101 has a battery pack 113. As mentioned, modules/packs must remain within a specific temperature range for optimal performance. The battery pack 113 can contain a variety of temperature, voltage, and current sensors (part of vehicle sensors 115). Collection of data from the battery pack sensors and activation of pack relays can be accomplished by the battery monitoring unit (BMU) 117 . The BMU 117 is also responsible for communications with the vehicle outside the battery pack 113.

The electric vehicle 101 is configured with the sensors 115 to assist with autonomous driving. For example, the sensors 115 may include infrared sensors, Light Detection and Ranging (LiDAR), radar, sonar, cameras (e.g., visible, night vision, etc.), and/or other devices/sensors that can scan and record data from the electric vehicle 101's surroundings for operational configuration for the electric vehicle 101.

In one embodiment, the UE 107 is configured with the vehicle charging module 119 and the application 121 that can perform the functions of the system 100. In one embodiment, the vehicle charging module 119 may act as a client for the vehicle charging platform 109 and perform one or more functions of the vehicle charging platform 109 alone or in combination with the vehicle charging platform 109. In another embodiment, the application 121 can trigger a scan of the charge point 103 automatically and/or invite the user to scan the charge point 103 with LiDAR on the LTE 107 and/or the vehicle 101, thereby establish a three-dimensional (3D) model of the charge point 103. The system 100 can use the 3D model and/or weather data to estimate the local temperature of the charge point 103, thus estimating the potential battery temperature of the electric vehicle 101 at the charge point 103.

In one embodiment, the sensor information can be supplemented with additional information from network-based services such as those provided by a services platform 123 and the services 125a-125n (also collectively referred to as services 125). By way of example, the services 125 can include the weather service 108, mapping service, navigation services, and/or other data services that provide data for providing a charging time window for an electric vehicle based on environmental conditions at a charge point. In one embodiment, the services platform 123 and/or the services 125 can provide contextual information such weather, traffic, etc. as well as facilitate communications (e.g., via mobile data networks, via vehicle communication platforms, via location-based services platforms, via social networking services, messaging services, crowdsourcing services, etc.) among vehicles to share battery charging and/or configuration information. In one embodiment, the services platform 123 and/or the services 125 interact with content providers 127a-127m (also collectively referred to as content providers 127) who provide content data (e.g., map data, imaging data, etc.) to the services platform 123 and/or the services 125. In one embodiment, the LTE 107 executes the application 121 that acts as client to the services platform 123, the services 125, the charge point 103, and/or the vehicle charging platform 109. In one embodiment, the sensor data, contextual information, and/or configuration information can be stored in a geographic database 129 for use by the charge point 103 and/or the vehicle charging platform 109.

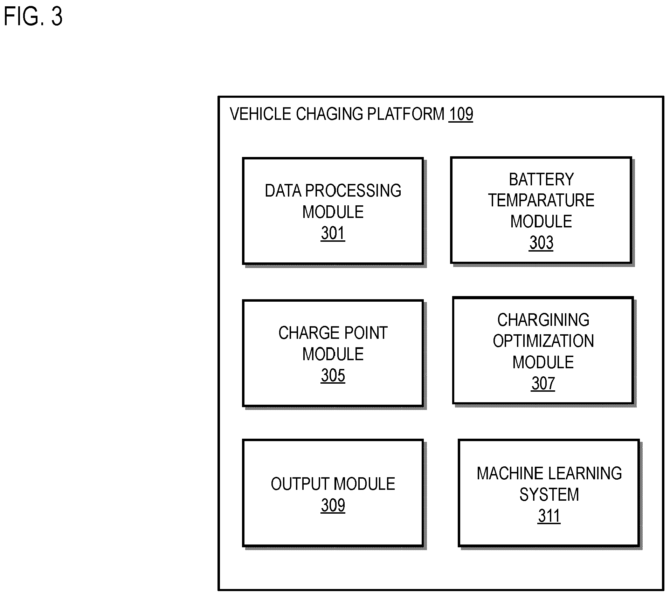

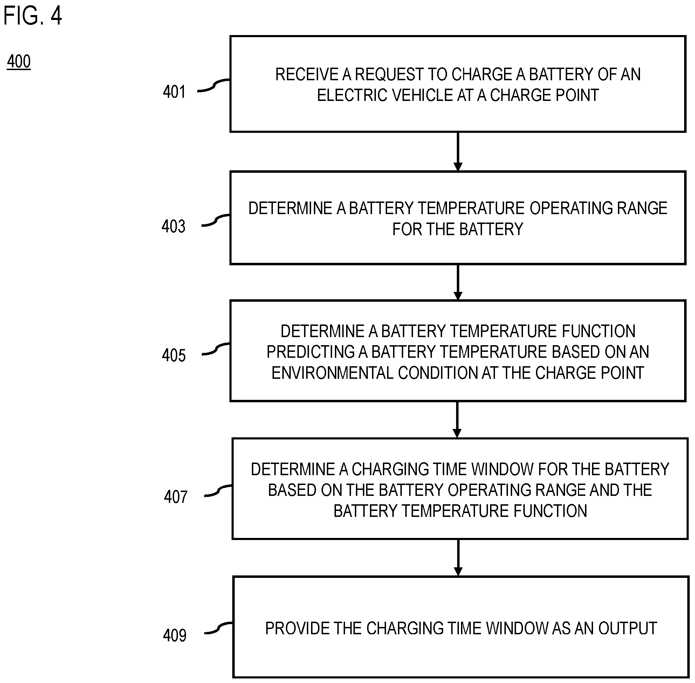

FIG. 3 is a diagram of the components of a vehicle charging module/platform configured to provide a charging time window for an electric vehicle based on environmental conditions at a charge point, according to example embodiment(s). By way of example, the vehicle charging platform 109 includes one or more components for multimodal position selection based on an aggregated previous position of a tracking device, according to the various embodiments described herein. It is contemplated that the functions of these components may be combined or performed by other components of equivalent functionality. In one embodiment, the vehicle charging platform 109 includes a data processing module 301, a battery temperature module 303, a charge point module 305, a charging optimization module 307, an output module 309, and a machine learning system 311, and has connectivity to the geographic database 129. The above presented modules and components of the vehicle charging platform 109 can be implemented in hardware, firmware, software, or a combination thereof. Though depicted as a separate entity in FIG. 1, it is contemplated that the vehicle charging platform 109 may be implemented as a module of any other component of the system 100. In another embodiment, the vehicle charging platform 109 and/or the modules 301-311 may be implemented as a cloud-based service, local service, native application, or combination thereof. The functions of the vehicle charging platform 109, and/or the modules 301-311 are discussed with respect to FIGs. 4-8.

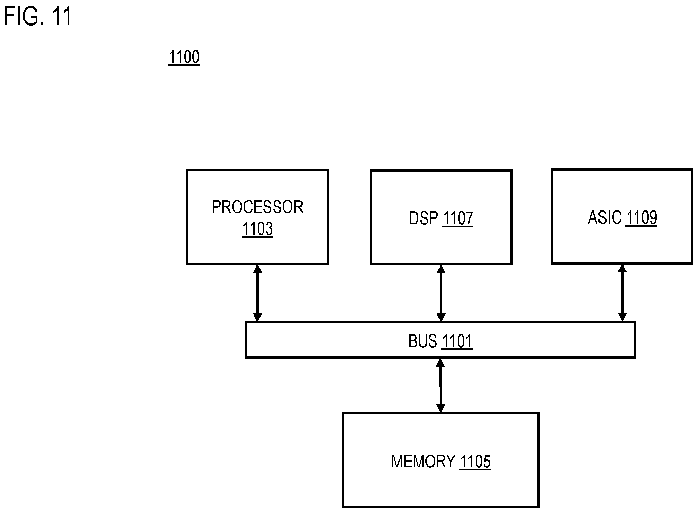

FIG. 4 is a flowchart of a process for providing a charging time window for an electric vehicle based on environmental conditions at a charge point, according to example embodiment(s). In various embodiments, the vehicle charging platform 109, and/or any of the modules 301-311 may perform one or more portions of the process 400 and may be implemented in, for instance, a chip set including a processor and a memory as shown in FIG. 11. As such, the vehicle charging platform 109, and/or the modules 301-311 can provide means for accomplishing various parts of the process 400, as well as means for accomplishing embodiments of other processes described herein in conjunction with other components of the system 100. Although the process 400 is illustrated and described as a sequence of steps, its contemplated that various embodiments of the process 400 may be performed in any order or combination and need not include all the illustrated steps.

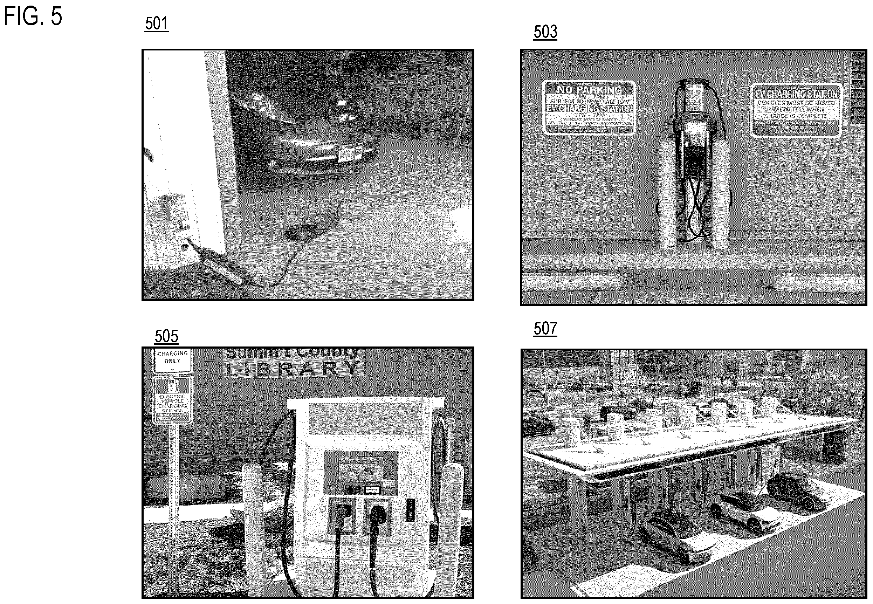

In one embodiment, for example, in step 401, the data processing module 301 can receive a request to charge a battery (e.g., the battery pack 113) of an electric vehicle (e.g., the electric vehicle 101) at a charge point (e.g., the charge point 103, such as a home garage, a fleet facility, a public charging station, a public charger at an office building, a shopping center, a public parking garage/lot, a hotel, a business, etc.). FIG. 5 are a diagram of images of example charge points, according to example embodiment(s). An image 501 depicts a level-1, or level-2, or level-3 EV charger based on, for example, the Society of Automotive Engineers (SAE) nomenclature with an extension cord cable connected to a power outlet outside of the garage, that requires no additional cost or installation. DC Level-1 charging supports up to 80 A (up to 36 kW) of charging. DC Level-2 charging supports up to 200 A (up to 90 kW). DC Level-3 charging supports up to 400 A (up to 240 kW). An image 503 depicts an EV charger installed inside an office building. An image 505 depicts an EV charger installed in a library parking lot. An image 507 depicts an EV charging station with a cover/roofed.

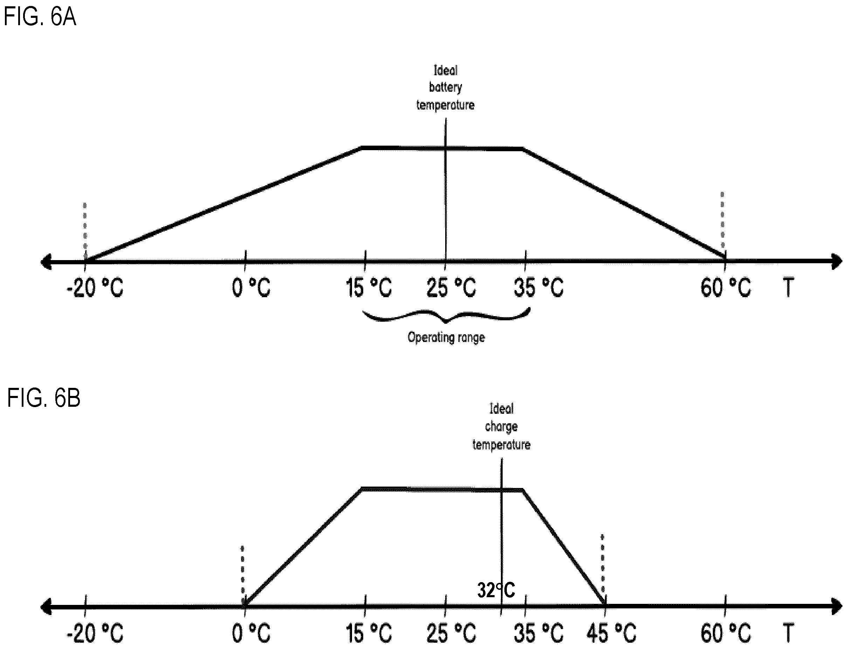

In one embodiment, in step 403, the battery temperature module 303 can determine a battery temperature operating range (e.g., 15°C to 35°C in FIG. 6A) for the battery (e.g., depending on the battery types, model, manufacturers, placements within the electric vehicle, etc. of the battery). The main types of batteries used in electric vehicles include lithium-ion, nickel-metal hydride, lead-acid, ultracapacitors, etc. Current battery technology is designed for extended life typically about 8 years or 100,000 miles. Some batteries can last longer (e.g., for 12 to 15 years in moderate climates, or 8 to 12 years in extreme climates).

The most common type of battery used in electric vehicles is the lithium-ion battery, since it has a high power-to-weight ratio, high energy efficiency, good high-temperature performance, and low self-discharge. In addition, most lithium-ion battery parts are recyclable. FIG. 6A is a diagram of available power of a generic lithium-ion battery in an electric car under various operation temperatures, according to example embodiment(s). In this case, the desired operating temperature range of a lithium-ion battery in an electric car is 15°C to 35°C with an ideal operating temperature of 25°C. Below 15°C the electrochemistry is sluggish, so the available battery power is limited. Below 0°C, the available power drops to below 50%. When reaching - 20°C, the available battery power drops almost to 0%. In the upper temperature region 35-60°C, the battery power available drops similarly. Instead the electric vehicle should limit power to minimize further temperature increase and prevent degradation or worse, thermal runaway. The ideal battery temperature for maximizing lifespan and usable capacity is between 15°C to 35°C. However, the temperature where the battery can provide most energy is around 45°C. As a consequence, each different battery model will have a corresponding diagram akin to FIG. 6A

As different EV battery makers can very chemistry of lithium-ion batteries, physical shapes, and sizes, their respective battery temperature operating range can vary. For instance, Tesla's Model 3 Standard Range uses lithium iron phosphate (LFP) batteries, while Tesla is making a long-term shift toward cheaper, zero-cobalt LFP. A large stack of cells is typically welded into smaller stacks called modules with shared cooling mechanisms, temperature monitors, etc., and several modules can be placed into a single pack. Referring back to FIG. 1, the electric vehicle 101 has a battery pack 113. As mentioned, modules/packs must remain within a specific temperature range for optimal performance. The battery pack 113 can contain a variety of temperature, voltage, and current sensors. Collection of data from the battery pack sensors and activation of pack relays can be accomplished by the battery monitoring unit (BMU) 117 . The BMU 117 is also responsible for communications with the vehicle outside the battery pack 113.

FIG. 6B is a diagram of available power of a generic lithium-ion battery in an electric car under various charging temperatures, according to example embodiment(s). The ambient temperature affects charging batteries even bigger. To maximize the lifespan of lithium-ion batteries, the system 100 can avoid charging at temperatures below 0°C or with very low current only (trickle charge). The desired charging temperature range of a lithium-ion battery in an electric car is also 15°C to 35°C in FIG. 6B (e.g., the same as the desired operation temperature range in FIG. 6A), yet with an ideal charging temperature of 32°C. On the other hand, the available battery power drops to zero below 0°C and above 45°C, that leads to a functioning temperature range in FIG. 6B narrower than the one in FIG. 6A.

In one embodiment, in step 405, the battery temperature module 303 can determine a battery temperature function that predicts a battery temperature of the battery (e.g., the battery pack 113) based on an environmental condition (e.g., environmental conditions 105, such as indoor/outdoor, roofed, sun exposure, wind exposure, etc.) at the charge point (e.g., the charge point 103). In one embodiment, the battery temperature function can be any heating/cooling function, such as an EV battery temperature profile generated based on real-world thermal experiments (e.g., taken by sensor(s) located on/in the battery pack), depending on the battery materials (e.g., lithium-ion, nickel-metal hydride, lead-acid, ultracapacitors, etc.), sizes/structures, placement within the vehicle, models, manufacturers, energy consumption before reaching a charge point (e.g., uphill, AC, etc.), total load of the power grid, etc. For instance, different battery designs change the charging profile, for example, under the floor or well insulated can change charging ranges, cool down speed, etc. Alternatively, the battery temperature can be estimated based on the ambient temperature at a charge point. In another embodiment, the battery temperature function can combine battery temperature and ambient temperature, for example, to determine how long to cool down or heat up the battery pack. In another embodiment, the battery temperature function can be heuristics derived from the experiments. In yet another embodiment, the battery temperature function can be generated using machine learning.

For instance, the battery temperature module 303 can use a battery temperature function for a lithium-ion battery model to predict thermal behaviors of the lithium-ion battery under realistic driving cycles (e.g., World harmonized Light-duty vehicles Test Procedure (WLTP)) for an electric vehicle. The model can predict the temperature during discharging and charging. The battery temperature module 303 can validate the model using real-world thermal experimental data.

As another instance, the battery temperature module 303 can apply an equivalent circuit model (ECM) that utilizes system identification techniques to relate the input and output behaviors of a battery cell with circuit elements, in order to estimate real-time heat generation and current-voltage (I-V) performance of the battery cell at different operational conditions. ECM is widely accepted at the application level. All parameters in the ECM are multi-variable functions of State of Charge (SOC), current, temperature, and cycle number. The ECM representation of a battery cell can be integrated within network models of the battery pack to estimate the real-time bulk temperature of cells during different operating scenarios, such as initial SOC, temperature, coolant flow rate, different charge and discharge profiles, etc. The results of the ECM provide valuable information about cell heat generation rate, terminal voltages, and SOC in real-time, even if the physical sensors embedded inside the battery pack become faulty.

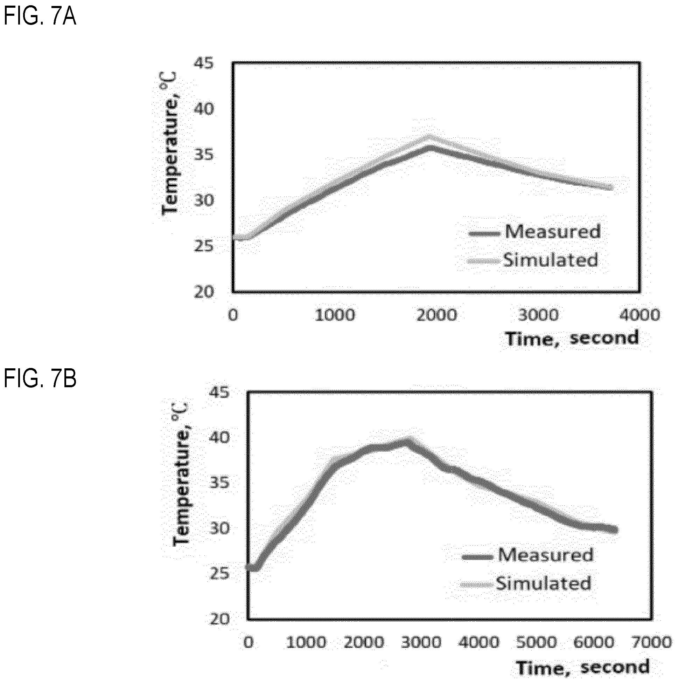

FIGs. 7A-7B are temperature versus time diagrams at a given location within a battery pack, according to example embodiment(s). The temperature results from the developed digital model of the battery pack can be compared to the data obtained from the experiments to validate the digital model. For instance, FIG. 7A shows the temperature change of the battery pack initially at 90% State of Charge (SOC) and 25°C as the battery pack was discharged at a constant c-rate of 1.5 for 1800 seconds. FIG. 7B presents the change in the temperature of a 10% SOC battery pack charging for 3000 seconds. A maximum difference of 0.7°C was observed between the digital model and the experimental data.

As another instance, the machine learning system 311 can use one or more predictive algorithms (e.g., predictive machine learning models such as, but not limited to, a convolutional neural network) which uses real-world thermal experiments on the battery pack as input features to determine the battery temperature function. During training, the machine learning system 311 feeds extracted thermal features from the real-world thermal experiments on the battery pack into a machine learning model (e.g., a neural network) to compute the battery temperature function. The machine learning system 311 then compares results of the battery temperature function to training data. The machine learning system 311 then incrementally adjusts the model parameters until the model minimizes a loss function (e.g., achieves a target identification accuracy). In other words, a "trained" machine learning model for estimating a battery temperature is a machine learning model with parameters (e.g., battery materials, structures, placement, models, manufacturers, coefficients, weights, etc.) adjusted to estimate a battery temperature with respect to the training data. Such an arrangement may be particularly useful for tracking the evolution of an individual vehicle's battery, as different usage parameters of the vehicle may degrade the battery over the years in different ways.

In one embodiment, the charge point module 305 can determine a temperature regulating time period for the battery, the charge point, or a combination thereof before charging based on the battery temperature, the environmental condition at the charge point, or a combination thereof, and the battery, the charge point, or a combination thereof can be cooled down or heated up to a battery temperature charging range (e.g., 15°C to 35°C in FIG. 6B while an ideal temperature of 32°C) during the temperature regulating time period. The charge point module 305 can then select the charge point (e.g., the charge point 103) by using the battery temperature function to predict that the environmental condition (e.g., environmental conditions 105, such as indoor/outdoor, roofed, sun exposure, wind exposure, etc.) of the charge point (e.g., the charge point 103) is expected to result in the battery temperature being in the battery temperature charging range during or after the temperature regulating time period, in the battery temperature being in the battery temperature operating range (e.g., 15°C to 35°C in FIG. 6A while an ideal temperature of 25°C) during, before, or after the charging time window, or a combination thereof. For instance, the charge point module 305 can guide the electric vehicle 101 to a charge point ready to be used, avoiding waiting for cooling down the battery pack (e.g., to avoid a charge point uphill that will heat up the battery pack even more).

In another embodiment, charge point module 305 can filter charge points on demand based on a charger type, a connector type, etc. For instance, a charger type can be Level 1 (2.3kW 3-pin, 3.6kW 16A, slow), Level 2 (7.4kW single-phase, 11kW 3-phase, 22kW commercial, fast), Level 3 (100kW (rapid) to 350kW (ultra-rapid)), Level 4 (1 MW+ (mega-chargers, for lorries and large commercial vehicles), etc.

A connector type can be J1772, CCS, CHAdeMO, Tesla, etc. The J1772 5-pin standard supports a wide range of single-phase alternating current (AC) charging rates from 1.44 kW (12 amps at 120 volts) via portable devices connected to a household NEMA 5-15 outlet up to 19.2 kW. CHAdeMO was developed by Japan Electric Vehicle Fast Charger Association and can charge at power levels up to 50kW, while CCS (Combined Charging System) was developed by European Automobile Association and can charge at power levels up to 350kW. Some Tesla cars in North America are equipped with its proprietary charging port that is not compatible with the CCS Combo 1 plugs.

For instance, the charge point module 305 can determine the environmental condition based on a temperature sensor (e.g., the sensor(s) 106) associated with the charge point (e.g., the charge point 103). As another instance, the charge point module 305 can determine the environmental condition based on a map label associated with the charge point (e.g., the charge point 103) in a geographic database. For example, the map label can indicate whether the charge point is located indoors, roofed, exposed, or outdoors.

In one embodiment, the environmental condition (e.g., environmental conditions 105, such as indoor/outdoor, roofed, sun exposure, wind exposure, etc.) can be determined based on weather data associated with the charge point (e.g., the charge point 103).

In one embodiment, the charge point module 305 can configure the charge point (e.g., the charge point 103) to provide a charging capability to the electric vehicle (e.g., the electric vehicle 101) only during the charging time window (e.g., 20 minutes during lunch time or night time).

In other embodiments, the charging time window, the charge point, or a combination thereof is further determined based on an expected time to charge (e.g., 12:35-12:55 pm), an expected energy level to charge (e.g., 40 kW, 60%, etc.), an expected energy level (e.g., 1 kW) for maintaining the battery temperature in the battery temperature operating range (e.g., 15°C to 35°C in FIG. 6A).

In one embodiment, in step 407, the charging optimization module 307 can determine a charging time window (e.g., 20 minutes during lunch time or night time) for charging the battery (e.g., the battery pack 113) based on the battery operating range (e.g., 15°C to 35°C in FIG. 6A) and the battery temperature function.

In one embodiment, the battery temperature module 303 can determine a current battery temperature (e.g., 38C) of the battery (e.g., the battery pack 113) at the time of the request, and the charging time window, the charge point, or a combination thereof can be determined by the battery temperature module 303 in conjunction with the charging optimization module 307 based on using the battery temperature function to predict when or where the current battery temperature will be in the battery temperature operating range (e.g., 15°C to 35°C in FIG. 6A) during, before, or after the charging time window (e.g., 20 minutes during lunch time or night time).

In other embodiment, the charging time window, the charge point, or a combination thereof can be determined further based on a current state of charge (e.g., 45%) of the battery, an expected required range (e.g., 100 km) until a next charge opportunity, a next charge point on route, or a combination thereof.

In one embodiment, the battery temperature module 303 can determine that the current temperature of the battery is within the battery temperature operating range (e.g., 15°C to 35°C in FIG. 6A), and the charging time windows can be determined so that charging of the battery is initiated before the current temperature falls outside of the battery temperature operating range (e.g., 15°C to 35°C in FIG. 6A). For instance, multiple vehicles (i.e., charge battery immediately after the vehicle is recently used since the battery is warmed to the correct temperature already. By way of example, when an electric vehicle 101 has recently been used and its batteries having optimal or close to an optimal operating temperature, the charging optimization module 307 can start charging immediately, instead of letting the batteries to cool down and then having to heat them up later during the night time.

In one embodiment, the charging time window, the charge point, or a combination thereof can be determined further based on an expected start of a next travel event (e.g., based on explicit user input or from the user's historical mobility patterns). For example, the electric vehicle 101 has the battery capacity required for the following day and the trips planned, rather than starting to charge it at that time point when it has been connected to the charge point 103, the charging optimization module 307 can heat up the vehicle batteries to operating temperature in the next morning so that the batteries will still have operating temperature at the time when the planned trip starts. Besides the battery pack, the charging optimization module 307 can heat up the cable connecting to the charge point. In addition, the charging optimization module 307 can ask the user to put insulation blanket(s) on the electric vehicle 101, to open/close car windows to regulate car temperature, to turn on solar-powered fans, etc.

In another embodiment, the charging optimization module 307 can optimize the order of charging different batteries in one electric vehicle. For instance, charging the main battery pack before the secondary/auxiliary battery pack. As another instance, charging a nominal battery pack before a malfunctioning/damaged battery pack. As another example, the charging optimization module 307 can set a minimum kilometer/mile range (e.g. 160km/100 miles).

In yet another embodiment, the charge point is a part of a charge network comprising at least one other charge point, and the at least one other charge point can serve at least one other electric vehicle. Battery electric vehicles (BEV) most commonly charge from the power grid (e.g., at home or using a street or store charge point) generated from a variety of resources, such as coal, hydroelectricity, nuclear, natural gas, photovoltaic solar cell panels, wind, etc. In this case, the charging optimization module 307 can optimize charging a plurality of electric vehicles on a power grid, or across power grids, etc.

The charging time window, the charge point, or a combination thereof can be further determined based on at least one of: (1) battery data associated with the at least one other electric vehicle; (2) another charging time window determined for the at least one other electric vehicle; or (3) another environmental condition at the at least one other charge point. As another example, when a household have two or more electric vehicles, the charging optimization module 307 can set one electric vehicle always fully charged for emergency (e.g., a pregnant wife).

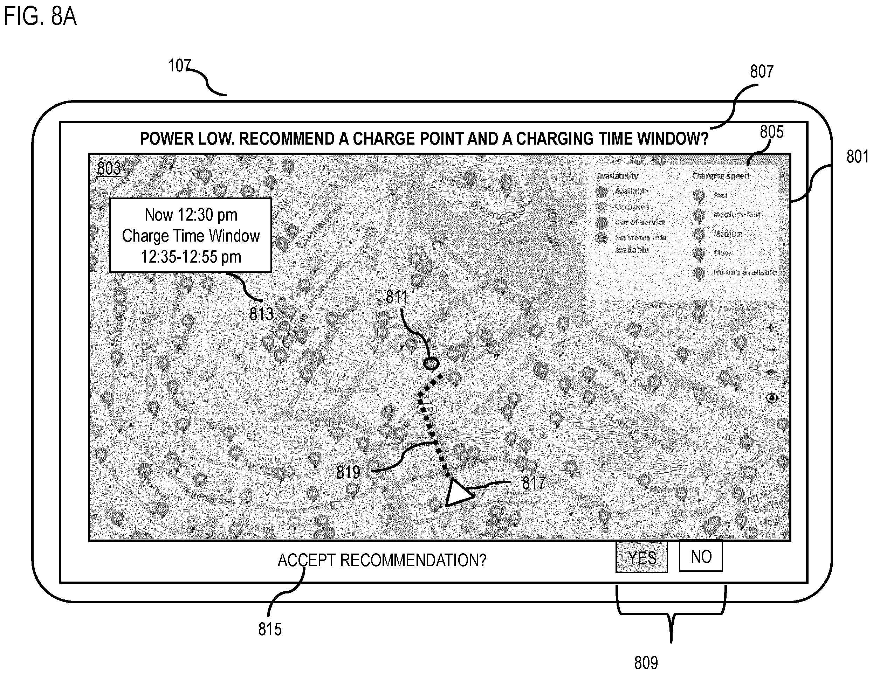

In one embodiment, in step 409, the output module 309 can provide the charging time window (e.g., 20 minutes during lunch time or night time) as an output (e.g., FIGs. 8A-8E). For example, the electric vehicle 101 can require batteries to be heated due to cold weather and have a longer charging period, and has no planned trips for the following day. Therefore, charging optimization module 307 can charge the vehicle 101 at one go (e.g., 8 hours) so that its batteries are partially charged when it is still cold to provide necessary battery capacity for unplanned use, yet the rest is charged when the weather is getting warmer thereby reducing the need to keep batteries at an operating temperature.

As another example, the electric vehicle 101 can be charged multiple times for shorter time periods as the electric vehicle 101 is located inside a warm garage and can be charged without heating the batteries, which can balance the electricity grid load at the times of heavy/less usage.

In other embodiments, the charging optimization module 307 can offer services that override these charging windows by providing full charge based on imminent travel events unanticipated by the mobility patterns of the vehicle/user(s) of the vehicle. For instance, a user can receive a notification of the charging time window on the UE 107, on the vehicle 101, etc. and either accept or request charging to leave at the next possible moment, or at any other user specified moment. Such services may be offered at additional cost (e.g., a higher kWh rates, surcharges, etc.)

FIGs. 8A-8E are diagrams of example user interfaces for providing a charging time window for an electric vehicle based on environmental conditions at a charge point, according to example embodiment(s). In one embodiment, example user interface (UI) 801 of FIG. 8A can present a map 803 of charge points in a geographic area, for an electric vehicle en route (e.g., to work, to visit customers, to sight-see, etc.). FIG. 8A is a user interface diagram that represents charge points in a geographic area, according to example embodiment(s). A panel 805 shows charge points coded with different gray scales and designs to express different availability status and charging speeds. For instance, a status of a charge point can be available, occupied, out-of-service, or no status info available (unknown). As another instance, the charging speed can be fast (e.g., an icon with 4 arrow markers), medium fast (e.g., an icon with 3 arrow markers), medium (e.g., an icon with 2 arrow markers), slow (e.g., an icon with 1 arrow marker), or no info available (unknown, e.g., an icon with zero arrow marker).

In this case, the system 100 can automatically work in the background and detect the status of the vehicle battery, and have the UI 801 display a user prompt 807 of "Power low. Recommend a charge point and a charge time window?" In response to user selection of Yes option of the options 809, the UI 801 displays a charge point 811 en route of the user's travel plan as close to a lunch time (e.g., Now 12:30 pm) and "Charging Time Window: 12:35-12:55 pm" as shown in a time tab 813.

The system 100 can determine the charge point 811 and/or the charging time window based on the location/characteristics of the vehicle 101, the locations/characteristics (e.g., environmental conditions, a charging efficiency score/parameter, etc.) of nearby and/or en route charge points 103, mobility graph of the vehicle 101 and/or a user of the vehicle 101, characteristics of the electricity grid, local weather, etc. as in the above-discussed embodiments. In one embodiment, the "power low" status can be deliberately planned by the system 100 for the user's trip of multiple stops (e.g., visiting customers, sight-seeing, etc.), and the charge point 811 and/or the charging time window were predetermined along with other charge point(s) and/or other charging time window(s) en route. In case that the user changes trip plan on demand, the system 100 can dynamically update the remaining charge point(s) and/or charging time window(s) en route for the user.

The UI 801 then displays another user prompt 815 of "Accept Recommendation?" In response to user selection of Yes option of the options 809, the UI 801 displays a direction icon 817 at the vehicle current location as well as a route 819 to the charge point 811.

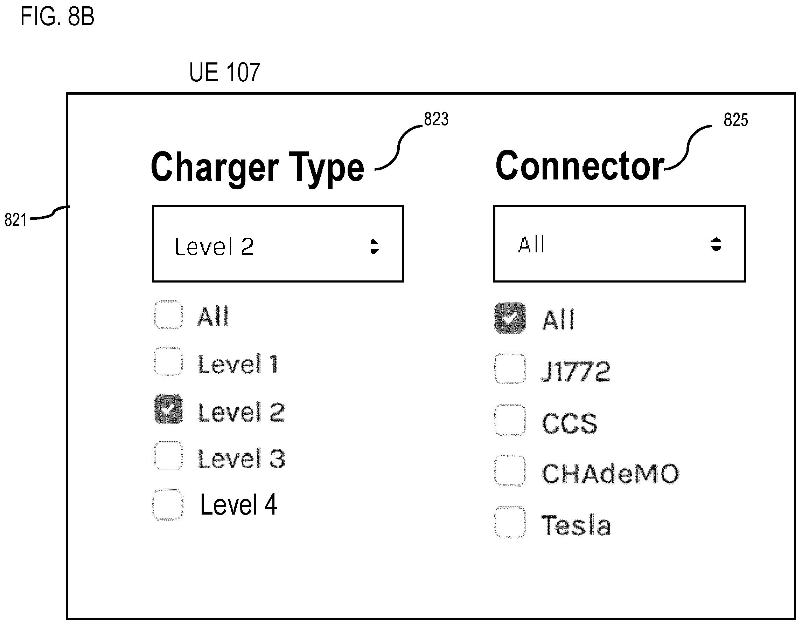

FIG. 8B is a user interface diagram that represents a subsequent window of the user interface of FIG. 8A, according to example embodiment(s). In this embodiment, an example UI 821 of FIG. 8B can optionally present a charger type filter 823 and a connector type filter 825 for the user to select. This step can be offered to users during a user registration stage or when en route, in order to filter the charge points in the map 803. For example, the user selects Level 2 chargers, as well as all types of connectors. The system 100 will consider the filter settings when recommending charge point(s) and/or charging time window(s).

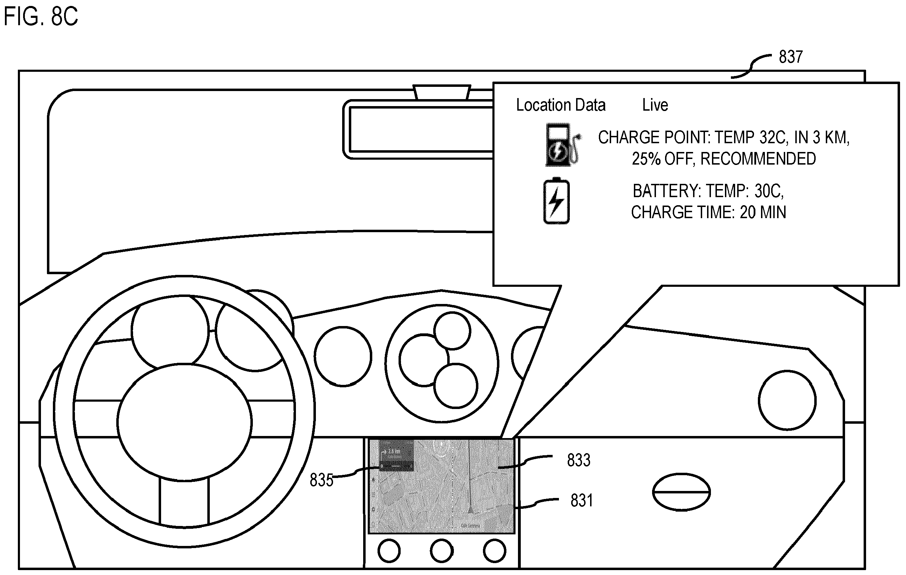

FIG. 8C is a user interface diagram that represents a user equipment display when the vehicle is approaching a recommended charge point (e.g., the charge point 811) based on a recommend charging time window (e.g., 12:35-12:55 pm) for charging a vehicle battery, according to example embodiment(s). In one scenario, the UI 831 of a vehicle dashboard includes a map 833 similar to the map 803 in FIG. 8A and directions 835 to reach the charge point 811, as well as a popup 827 with detailed information of the charge point 811 and/or the vehicle battery pack (e.g., the battery pack 113). In this case, the popup 827 displays "CHARGE POINT: TEMP 32C, IN 3 KM, 25% OFF, RECOMMENDED" and "BATTERY: TEMP 30C, CHARGE TIME: 20 MIN." For instance, some power grid operator can use differential pricing (e.g., 25% off during off-peak time like lunch time or in the night) to redistribute EV charging load. In this case, the system 100 can save electricity, and will some back to the customer.

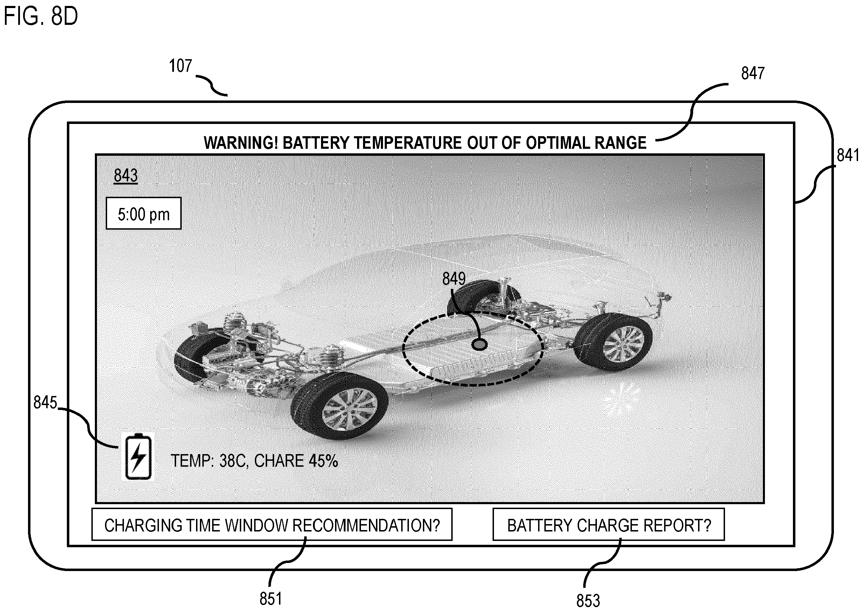

FIG. 8D is a user interface diagram that represents a vehicle in a charge point, according to example embodiment(s). In this case, the charge point is a home garage of the user, and the user can query the system 100 for the status of the electric vehicle 101 when arrives home. In the case, the UI 841 shows an image 843 of the vehicle 101 with the battery system exposed. At 5:00 pm, the UI 841 also display a message 845 that the battery pack 113 has a status of "TEMP: 38C, CHARGE 45%," an alert 847: "Warning! Battery temperature out of optimal range," and highlighting the battery pack with markers 849 in the image 843.

As the battery pack temperature is outside of the recommend charging range 15-35C, the system 100 can recommend charging at a later time when the battery pack temperature drops below 35C, via offering an option 851 of "Charging time window recommendation?", and an option 853 of "Battery charge report?" in the UI 841.

When the user select the option 851 of "Charging time window recommendation?", the system 100 can determine the garage as the recommend charge point, and/or a charging time window of "6:00-6:20 pm" based on the locations/characteristics (e.g., environmental conditions, a charging efficiency score/parameter, etc.) of the garage, mobility graph of the user (e.g., a dinner appointment at a nearby restaurant, next-day working from home, etc.), characteristics of the electricity grid of the community, local weather, etc. as in the above-discussed embodiments. Rather than displaying "Charging will be delayed until the battery temperature is optimal", the system can display: "The battery will be fully charged by your dinner appointment."

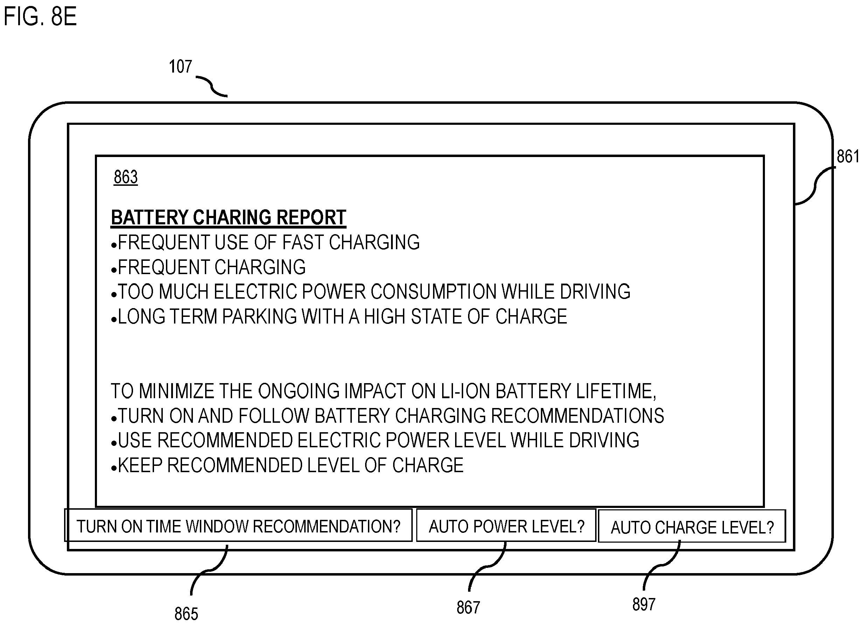

When the user select the option 853 of "Battery charge report?," the system can generate a battery charge report for the electric vehicle 101 on demand. FIG. 8E is a user interface diagram that represents a subsequent window of the user interface of FIG. 8D, according to example embodiment(s). In this case, a UI 861 displays in a pane 863 includes a battery charge report and recommendations. For instance, the battery charge report includes bullet points of user's frequent use of fast charging, frequent charging, too much electric power consumption while driving (e.g., high speed, uneven acceleration, loud music, strong AC, etc.), long term parking with a high state of charge, etc. The system 100 can generate recommendations to minimize the ongoing impacts of these user behaviors on EV battery pack including to turn on and follow the system battery charging recommendations (e.g., efficient/environmentally friendly charging), to use recommend electric power level while driving, to keep recommended level of charge, etc. In this case, the UI 861 can display an option 865 of "Turn on time window recommendation", an option 867 of "Auto power level", and an option 869 of "Auto charge level" for the user to select.

The above-discussed embodiments can determine the battery temperature at a current time or at an anticipated charging time at different charge points, thereby recommending a charge point and/or a charging time window based on the temperature.

The above-discussed embodiments can guide the electric vehicle to a charge point ready to be used, no tot wait for the battery pack to cool down or heat up.

The above-discussed embodiments manage not only energy to charge batteries, but also energy to maintain the battery temperature ready to charge for note in the power grid.

Returning to FIG. 1, in one embodiment, the vehicle charging platform 109 of system 100 has access to the geographic database 129 for storing location data, 3D models, and/or environmental conditions 105 associated with charge points 103, and map data layers generated based on the charge point characteristics detected by vehicle/UE sensors (e.g., LiDAR scans). In one embodiment, the vehicle charging platform 109 also has connectivity to the geographic database 129 to provide location-based services based on the charge point data and/or relevant map data layers. The vehicle charging platform 109 can operate, for instance, in connection with LTEs 107 and/or the charge points 103 to provide a charging time window for an electric vehicle based on environmental conditions at a charge point as requested. The LTE 107 may be a personal navigation device ("PND"), a cellular telephone, a mobile phone, a personal digital assistant ("PDA"), a watch, a camera, a computer, and/or any other device that supports location-based services, e.g., digital routing and map display. It is contemplated that a device employed by a user may be interfaced with an on-board navigation system of a mode of transport (e.g., a vehicle) or wirelessly/physically connected to the vehicle to serve as the navigation system. Also, the UE 107 may be configured to access the communication network 111 by way of any known or still developing communication protocols to transmit and/or receive weather data, charge point data, battery temperature operating range data, battery temperature function data, estimated battery temperature data, charging time window data, and/or map data layers.

Also, the LTE 107 and/or the electric vehicle 101 may be configured with an application 121 for collecting sensor data (e.g., temperature data, LiDAR data, etc.) and/or for interacting with one or more content providers 127, services 125 of the services platform 123, or a combination thereof. The application 121 may be any type of application that is executable on UE 107 and/or the electric vehicle 101, such as mapping applications, location-based service applications, navigation applications, content provisioning services, camera/imaging applications, media player applications, social networking applications, calendar applications, and the like. In one embodiment, the content providers 127, services 125, and/or services platform 123 receive the charging time window data and/or map data layers generated by the vehicle charging platform 109 for executing its functions and/or services.

UE 107 and/or the electric vehicle 101 may be configured with various sensors (not shown for illustrative convenience) for acquiring and/or generating weather data, charge point data, battery temperature operating range data, battery temperature function data, estimated battery temperature data, charging time window data, map data layers, probe or trajectory data associated with a vehicle, a driver, other vehicles, conditions regarding the driving environment or roadway, etc. For example, sensors may be used as GNSS/GPS receivers for interacting with one or more navigation satellites to determine and track the current speed, position and location of a vehicle travelling along a roadway. In addition, the sensors may gather other vehicle sensor data such as but not limited to tilt data (e.g., a degree of incline or decline of the vehicle during travel), motion data, light data, sound data, image data, weather data, temporal data and other data associated with the electric vehicle 101 and/or LTEs 107. Still further, the sensors may detect local or transient network and/or wireless signals, such as those transmitted by nearby devices during navigation of a vehicle along a roadway (Li-Fi, near field communication (NFC)) etc. This may include, for example, network routers configured within a premise (e.g., home or business), another UE 107 or vehicle 101 or a communications-capable traffic system (e.g., traffic lights, traffic cameras, traffic signals, digital signage, etc.).

It is noted therefore that the above described data may be transmitted via the communication network 111 as weather data, charge point data, battery temperature operating range data, battery temperature function data, estimated battery temperature data, charging time window data, and/or map data layers, according to any known wireless communication protocols. For example, each LTE 107, mobile application 121, user, and/or the electric vehicle 101 may be assigned a unique probe identifier (probe ID) or pseudonym for use in reporting or transmitting data collected by the modes of transport and UEs 107. In one embodiment, each LTE 107 and/or the electric vehicle 101 is configured to report probe data as probe points, which are individual data records collected at a point in time that records location data. Probes or probe points can be collected by the system 100 from the LTEs 107, applications 121, and/or the electric vehicles 101 in real-time, in batches, continuously, or at any other frequency requested by the system 100 over, for instance, the communication network 111 for processing by the vehicle charging platform 109.

In one embodiment, the vehicle charging platform 109 retrieves aggregated probe points gathered and/or generated by LTE 107 resulting from the travel of UEs 107, and modes of transport on a road segment or other travel network (e.g., pedestrian paths, etc.). A probe database (not shown) can be used to store a plurality of probe points and/or trajectories (e.g., trajectory data) generated by different UEs 107, applications 121, modes of transport, etc. over a period of time. A time sequence of probe points specifies a trajectory-i.e., a path traversed by a LTE 107, application 121, modes of transport, etc. over a period of time.

In one embodiment, the communication network 111 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one embodiment, the vehicle charging platform 109 may be a platform with multiple interconnected components. The vehicle charging platform 109 may include multiple servers, intelligent networking devices, computing devices, components, and corresponding software for minding pedestrian and/or vehicle specific probe data from mix-mode probe data. In addition, it is noted that the vehicle charging platform 109 may be a separate entity of the system 100, a part of the one or more services 125 of the services platform 123, or included within the LTE 107 (e.g., as part of the applications 121).

In one embodiment, the content providers 127 may provide content or data (e.g., probe data) to the components of the system 100. The content provided may be any type of content, such as weather data, charge point data, battery temperature operating range data, battery temperature function data, estimated battery temperature data, charging time window data, map data layers, location data, textual content, audio content, video content, image content, etc. In one embodiment, the content providers 127 may also store content associated with the modes of transport, the UE 107, the vehicle charging platform 109, and/or the services 125. In another embodiment, the content providers 127 may manage access to a central repository of data, and offer a consistent, standard interface to data, such as a trajectories database, a repository of probe data, average travel times for one or more road links or travel routes (e.g., during free flow periods, day time periods, rush hour periods, nighttime periods, or a combination thereof), speed information for at least one vehicle, other traffic information, etc. Any known or still developing methods, techniques, or processes for retrieving and/or accessing trajectory or probe data from one or more sources may be employed by the vehicle charging platform 109.

By way of example, the LTE 107, application 121, the electric vehicle 101, and the vehicle charging platform 109 communicate with each other and other components of the system 100 using well known, new or still developing protocols. In this context, a protocol includes a set of rules defining how the network nodes within the communication network 111 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is the to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

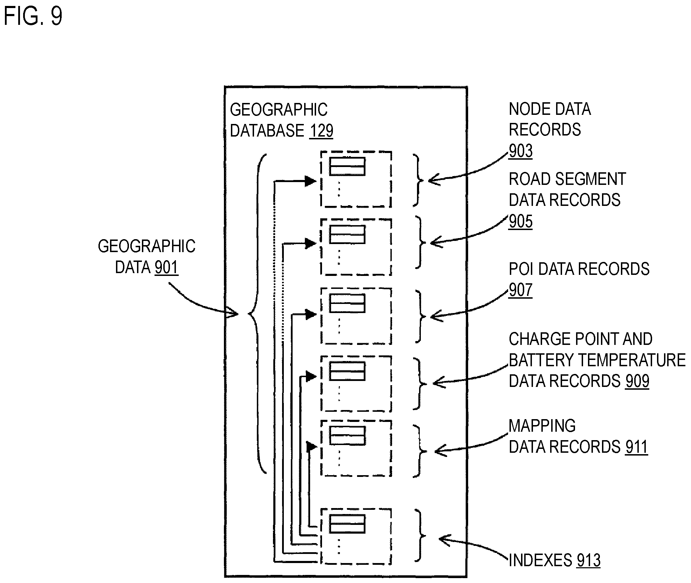

FIG. 9 is a diagram of a geographic database (such as the database 129), according to one embodiment. In one embodiment, the geographic database 111 includes geographic data 901 used for (or configured to be compiled to be used for) mapping and/or navigation-related services, such as for video odometry based on the parametric representation of lanes include, e.g., encoding and/or decoding parametric representations into lane lines. In one embodiment, the geographic database 129 include high resolution or high definition (HD) mapping data that provide centimeter-level or better accuracy of map features. For example, the geographic database 129 can be based on LiDAR or equivalent technology to collect very large numbers of 3D points depedning on the context (e.g., a single street/scene, a country, etc.) and model road surfaces and other map features down to the number lanes and their widths. In one embodiment, the mapping data (e.g., mapping data records 911) capture and store details such as the slope and curvature of the road, lane markings, roadside objects such as signposts, including what the signage denotes. By way of example, the mapping data enable highly automated vehicles to precisely localize themselves on the road. As another example, mapping data may capture charge point objects, charge point locations, charge point geometries, charge point access paths/road segments, charge point adjacent infrastructure, and the like.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 129.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 129 follows certain conventions. For example, links do not cross themselves and do not cross each other except at a node. Also, there are no duplicated shape points, nodes, or links. Two links that connect each other have a common node. In the geographic database 129, overlapping geographic features are represented by overlapping polygons. When polygons overlap, the boundary of one polygon crosses the boundary of the other polygon. In the geographic database 129, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 129 includes node data records 903, road segment or link data records 905, POI data records 907, charge point and battery temperature data records 909, mapping data records 911, and indexes 913, for example. More, fewer or different data records can be provided. In one embodiment, additional data records (not shown) can include cartographic ("carto") data records, routing data, and maneuver data. In one embodiment, the indexes 913 may improve the speed of data retrieval operations in the geographic database 129. In one embodiment, the indexes 913 may be used to quickly locate data without having to search every row in the geographic database 129 every time it is accessed. For example, in one embodiment, the indexes 913 can be a spatial index of the polygon points associated with stored feature polygons.

In exemplary embodiments, the road segment data records 905 are links or segments representing roads, streets, or paths, as can be used in the calculated route or recorded route information for determination of one or more personalized routes. The node data records 903 are end points (such as intersections) corresponding to the respective links or segments of the road segment data records 905. The road link data records 905 and the node data records 903 represent a road network, such as used by vehicles, cars, and/or other entities. Alternatively, the geographic database 129 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 129 can include data about the POIs and their respective locations in the POI data records 907. The geographic database 129 can also include data about places, such as cities, towns, or other communities, and other geographic features, such as bodies of water, mountain ranges, etc. Such place or feature data can be part of the POI data records 907 or can be associated with POIs or POI data records 907 (such as a data point used for displaying or representing a position of a city). In one embodiment, certain attributes, such as lane marking data records, mapping data records and/or other attributes can be features or layers associated with the link-node structure of the database.

In one embodiment, the geographic database 129 can also include charge point and battery temperature data records 909 for storing weather data, charge point data, battery temperature operating range data, battery temperature function data, estimated battery temperature data, charging time window data, map data layers, training data, prediction models, annotated observations, computed featured distributions, sampling probabilities, and/or any other data generated or used by the system 100 according to the various embodiments described herein. By way of example, the charge point and battery temperature data records 909 can be associated with one or more of the node records 903, road segment records 905, and/or POI data records 907 to support EV charging activities as discussed, localization or visual odometry and a power gauge in a kWh (kilowatt hour) based on the charging/discharging features stored therein, and the corresponding estimated quality of the charging/discharging features. In this way, the records 909 can also be associated with or used to classify the characteristics or metadata of the corresponding records 903, 905, and/or 907.

In one embodiment, as discussed above, the mapping data records 911 model road surfaces and other map features to centimeter-level or better accuracy. The mapping data records 911 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the mapping data records 911 are divided into spatial partitions of varying sizes to provide mapping data to vehicles 101 and other end user devices with near real-time speed without overloading the available resources of the vehicles 101 and/or devices (e.g., computational, memory, bandwidth, etc. resources).

In one embodiment, the mapping data records 911 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the mapping data records 911.

In one embodiment, the mapping data records 911 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 129 can be maintained by the content providers 127 in association with the services platform 123 (e.g., a map developer). The map developer can collect geographic data to generate and enhance the geographic database 129. There can be different ways used by the map developer to collect data. These ways can include obtaining data from other sources, such as municipalities or respective geographic authorities. In addition, the map developer can employ field personnel to travel by vehicle (e.g., vehicles 101 and/or LTEs 107) along roads throughout the geographic region to observe features and/or record information about them, for example. Also, remote sensing, such as aerial or satellite photography, can be used.

The geographic database 129 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle 101 or a LTE 107, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing a charging time window for an electric vehicle based on environmental conditions at a charge point may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

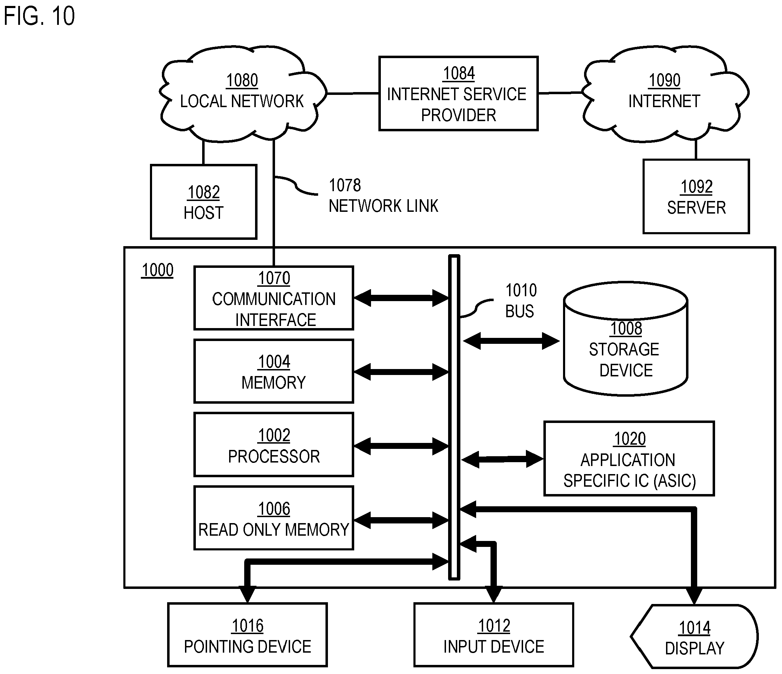

FIG. 10 illustrates a computer system 1000 upon which an embodiment of the invention may be implemented. Computer system 1000 is programmed (e.g., via computer program code or instructions) to provide a charging time window for an electric vehicle based on environmental conditions at a charge point as described herein and includes a communication mechanism such as a bus 1010 for passing information between other internal and external components of the computer system 1000. Information (also called data) is represented as a physical expression of a measurable phenomenon, typically electric voltages, but including, in other embodiments, such phenomena as magnetic, electromagnetic, pressure, chemical, biological, molecular, atomic, subatomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1010 includes one or more parallel conductors of information so that information is transferred quickly among devices coupled to the bus 1010. One or more processors 1002 for processing information are coupled with the bus 1010.

A processor 1002 performs a set of operations on information as specified by computer program code related to providing a charging time window for an electric vehicle based on environmental conditions at a charge point. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1010 and placing information on the bus 1010. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1002, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1000 also includes a memory 1004 coupled to bus 1010. The memory 1004, such as a random access memory (RAM) or other dynamic storage device, stores information including processor instructions for providing a charging time window for an electric vehicle based on environmental conditions at a charge point. Dynamic memory allows information stored therein to be changed by the computer system 1000. RAM allows a unit of information stored at a location called a memory address to be stored and retrieved independently of information at neighboring addresses. The memory 1004 is also used by the processor 1002 to store temporary values during execution of processor instructions. The computer system 1000 also includes a read only memory (ROM) 1006 or other static storage device coupled to the bus 1010 for storing static information, including instructions, that is not changed by the computer system 1000. Some memory is composed of volatile storage that loses the information stored thereon when power is lost. Also coupled to bus 1010 is a non-volatile (persistent) storage device 1008, such as a magnetic disk, optical disk or flash card, for storing information, including instructions, that persists even when the computer system 1000 is turned off or otherwise loses power.

Information, including instructions for providing a charging time window for an electric vehicle based on environmental conditions at a charge point, is provided to the bus 1010 for use by the processor from an external input device 1012, such as a keyboard containing alphanumeric keys operated by a human user, or a sensor. A sensor detects conditions in its vicinity and transforms those detections into physical expression compatible with the measurable phenomenon used to represent information in computer system 1000. Other external devices coupled to bus 1010, used primarily for interacting with humans, include a display device 1014, such as a cathode ray tube (CRT) or a liquid crystal display (LCD), or plasma screen or printer for presenting text or images, and a pointing device 1016, such as a mouse or a trackball or cursor direction keys, or motion sensor, for controlling a position of a small cursor image presented on the display 1014 and issuing commands associated with graphical elements presented on the display 1014. In some embodiments, for example, in embodiments in which the computer system 1000 performs all functions automatically without human input, one or more of external input device 1012, display device 1014 and pointing device 1016 is omitted.

In the illustrated embodiment, special purpose hardware, such as an application specific integrated circuit (ASIC) 1020, is coupled to bus 1010. The special purpose hardware is configured to perform operations not performed by processor 1002 quickly enough for special purposes. Examples of application specific ICs include graphics accelerator cards for generating images for display 1014, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1000 also includes one or more instances of a communications interface 1070 coupled to bus 1010. Communication interface 1070 provides a one-way or two-way communication coupling to a variety of external devices that operate with their own processors, such as printers, scanners and external disks. In general the coupling is with a network link 1078 that is connected to a local network 1080 to which a variety of external devices with their own processors are connected. For example, communication interface 1070 may be a parallel port or a serial port or a universal serial bus (USB) port on a personal computer. In some embodiments, communications interface 1070 is an integrated services digital network (ISDN) card or a digital subscriber line (DSL) card or a telephone modem that provides an information communication connection to a corresponding type of telephone line. In some embodiments, a communication interface 1070 is a cable modem that converts signals on bus 1010 into signals for a communication connection over a coaxial cable or into optical signals for a communication connection over a fiber optic cable. As another example, communications interface 1070 may be a local area network (LAN) card to provide a data communication connection to a compatible LAN, such as Ethernet. Wireless links may also be implemented. For wireless links, the communications interface 1070 sends or receives or both sends and receives electrical, acoustic or electromagnetic signals, including infrared and optical signals, that carry information streams, such as digital data. For example, in wireless handheld devices, such as mobile telephones like cell phones, the communications interface 1070 includes a radio band electromagnetic transmitter and receiver called a radio transceiver. In certain embodiments, the communications interface 1070 enables connection to the communication network 111 for providing a charging time window for an electric vehicle based on environmental conditions at a charge point.

The term computer-readable medium is used herein to refer to any medium that participates in providing information to processor 1002, including instructions for execution. Such a medium may take many forms, including, but not limited to, non-volatile media, volatile media and transmission media. Non-volatile media include, for example, optical or magnetic disks, such as storage device 1008. Volatile media include, for example, dynamic memory 1004. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1078 typically provides information communication using transmission media through one or more networks to other devices that use or process the information. For example, network link 1078 may provide a connection through local network 1080 to a host computer 1082 or to equipment 1084 operated by an Internet Service Provider (ISP). ISP equipment 1084 in turn provides data communication services through the public, world-wide packet-switching communication network of networks now commonly referred to as the Internet 1090.

A computer called a server host 1092 connected to the Internet hosts a process that provides a service in response to information received over the Internet. For example, server host 1092 hosts a process that provides information representing video data for presentation at display 1014. It is contemplated that the components of system can be deployed in various configurations within other computer systems, e.g., host 1082 and server 1092.

FIG. 11 illustrates a chip set 1100 upon which an embodiment of the invention may be implemented. Chip set 1100 is programmed to provide a charging time window for an electric vehicle based on environmental conditions at a charge point as described herein and includes, for instance, the processor and memory components described with respect to FIG. 10 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1100 includes a communication mechanism such as a bus 1101 for passing information among the components of the chip set 1100. A processor 1103 has connectivity to the bus 1101 to execute instructions and process information stored in, for example, a memory 1105. The processor 1103 may include one or more processing cores with each core configured to perform independently. A multi-core processor enables multiprocessing within a single physical package. Examples of a multi-core processor include two, four, eight, or greater numbers of processing cores. Alternatively or in addition, the processor 1103 may include one or more microprocessors configured in tandem via the bus 1101 to enable independent execution of instructions, pipelining, and multithreading. The processor 1103 may also be accompanied with one or more specialized components to perform certain processing functions and tasks such as one or more digital signal processors (DSP) 1107, or one or more application-specific integrated circuits (ASIC) 1109. A DSP 1107 typically is configured to process real-world signals (e.g., sound) in real time independently of the processor 1103. Similarly, an ASIC 1109 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1103 and accompanying components have connectivity to the memory 1105 via the bus 1101. The memory 1105 includes both dynamic memory (e.g., RAM, magnetic disk, writable optical disk, etc.) and static memory (e.g., ROM, CD-ROM, etc.) for storing executable instructions that when executed perform the inventive steps described herein to provide a charging time window for an electric vehicle based on environmental conditions at a charge point. The memory 1105 also stores the data associated with or generated by the execution of the inventive steps.

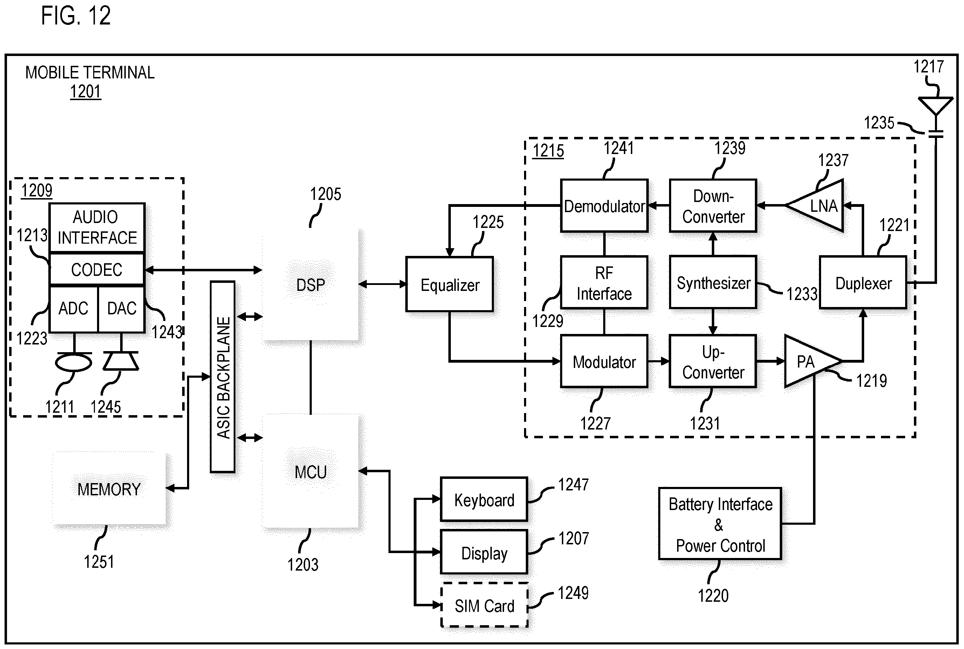

FIG. 12 is a diagram of exemplary components of a mobile terminal 1201 (e.g., handset or vehicle or part thereof) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1203, a Digital Signal Processor (DSP) 1205, and a receiver/transmitter unit including a microphone gain control unit and a speaker gain control unit. A main display unit 1207 provides a display to the user in support of various applications and mobile station functions that offer automatic contact matching. An audio function circuitry 1209 includes a microphone 1211 and microphone amplifier that amplifies the speech signal output from the microphone 1211. The amplified speech signal output from the microphone 1211 is fed to a coder/decoder (CODEC) 1213.

A radio section 1215 amplifies power and converts frequency in order to communicate with a base station, which is included in a mobile communication system, via antenna 1217. The power amplifier (PA) 1219 and the transmitter/modulation circuitry are operationally responsive to the MCU 1203, with an output from the PA 1219 coupled to the duplexer 1221 or circulator or antenna switch, as known in the art. The PA 1219 also couples to a battery interface and power control unit 1220.

In use, a user of mobile station 1201 speaks into the microphone 1211 and his or her voice along with any detected background noise is converted into an analog voltage. The analog voltage is then converted into a digital signal through the Analog to Digital Converter (ADC) 1223. The control unit 1203 routes the digital signal into the DSP 1205 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1225 for compensation of any frequency-dependent impairments that occur during transmission though the air such as phase and amplitude distortion. After equalizing the bit stream, the modulator 1227 combines the signal with a RF signal generated in the RF interface 1229. The modulator 1227 generates a sine wave by way of frequency or phase modulation. In order to prepare the signal for transmission, an up-converter 1231 combines the sine wave output from the modulator 1227 with another sine wave generated by a synthesizer 1233 to achieve the desired frequency of transmission. The signal is then sent through a PA 1219 to increase the signal to an appropriate power level. In practical systems, the PA 1219 acts as a variable gain amplifier whose gain is controlled by the DSP 1205 from information received from a network base station. The signal is then filtered within the duplexer 1221 and optionally sent to an antenna coupler 1235 to match impedances to provide maximum power transfer. Finally, the signal is transmitted via antenna 1217 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1201 are received via antenna 1217 and immediately amplified by a low noise amplifier (LNA) 1237. A down-converter 1239 lowers the carrier frequency while the demodulator 1241 strips away the RF leaving only a digital bit stream. The signal then goes through the equalizer 1225 and is processed by the DSP 1205. A Digital to Analog Converter (DAC) 1243 converts the signal and the resulting output is transmitted to the user through the speaker 1245, all under control of a Main Control Unit (MCU) 1203-which can be implemented as a Central Processing Unit (CPU) (not shown).

The MCU 1203 receives various signals including input signals from the keyboard 1247. The keyboard 1247 and/or the MCU 1203 in combination with other user input components (e.g., the microphone 1211) comprise a user interface circuitry for managing user input. The MCU 1203 runs a user interface software to facilitate user control of at least some functions of the mobile station 1201 to provide a charging time window for an electric vehicle based on environmental conditions at a charge point. The MCU 1203 also delivers a display command and a switch command to the display 1207 and to the speech output switching controller, respectively. Further, the MCU 1203 exchanges information with the DSP 1205 and can access an optionally incorporated SIM card 1249 and a memory 1251. In addition, the MCU 1203 executes various control functions required of the station. The DSP 1205 may, depending upon the implementation, perform any of a variety of conventional digital processing functions on the voice signals. Additionally, DSP 1205 determines the background noise level of the local environment from the signals detected by microphone 1211 and sets the gain of microphone 1211 to a level selected to compensate for the natural tendency of the user of the mobile station 1201.

The CODEC 1213 includes the ADC 1223 and DAC 1243. The memory 1251 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1251 may be, but not limited to, a single memory, CD, DVD, ROM, RAM, EEPROM, optical storage, or any other non-volatile or non-transitory storage medium capable of storing digital data.

An optionally incorporated SIM card 1249 carries, for instance, important information, such as the cellular phone number, the carrier supplying service, subscription details, and security information. The SIM card 1249 serves primarily to identify the mobile station 1201 on a radio network. The card 1249 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

The following embodiments are disclosed as example embodiments of the present invention:
Example embodiment 1:
   A method comprising:
   receiving a request to charge a battery of an electric vehicle at a charge point;
   determining a battery temperature operating range for the battery;
   determining a battery temperature function that predicts a battery temperature of the battery based on an environmental condition at the charge point;
   determining a charging time window for charging the battery based on the battery operating range and the battery temperature function; and
   providing the charging time window as an output.
Example embodiment 2:
   The method of embodiment 1, further comprising:
   determining a temperature regulating time period for the battery, the charge point, or a combination thereof before charging based on the battery temperature, the environmental condition at the charge point, or a combination thereof, wherein the battery, the charge point, or a combination thereof is cooled down or heated up to a battery temperature charging range during the temperature regulating time period; and selecting the charge point by using the battery temperature function to predict that the environmental condition of the charge point is expected to result in the battery temperature being in the battery temperature charging range during or after the temperature regulating time period, in the battery temperature operating range during, before, or after the charging time window, or a combination thereof.
Example embodiment 3:
   The method of embodiment 1, further comprising:
   determining the environmental condition based on a temperature sensor associated with the charge point.
Example embodiment 4:
   The method of embodiment 1, further comprising:
   determining the environmental condition based on a map label associated with the charge point in a geographic database.
Example embodiment 5:
   The method of embodiment 4, wherein the map label indicates whether the charge point is located indoors, roofed, exposed, or outdoors.
Example embodiment 6:
   The method of embodiment 1, wherein the environmental condition is determined based on weather data associated with the charge point.
Example embodiment 7:
   The method of embodiment 1, further comprising:
   determining a current battery temperature of the battery at the time of the request,
   wherein the charging time window, the charge point, or a combination thereof is determined based on using the battery temperature function to predict when or where the current battery temperature will be in the battery temperature operating range during, before, or after the charging time window.
Example embodiment 8:
   The method of embodiment 1, wherein the charging time window, the charge point, or a combination thereof is determined further based on a current state of charge of the battery, an expected required range until a next charge opportunity, a next charge point on route, or a combination thereof.
Example embodiment 9:
   The method of embodiment 1, further comprising:
   configuring the charge point to provide a charging capability to the electric vehicle only during the charging time window.
Example embodiment 10:
   The method of embodiment 1, wherein the charging time window, the charge point, or a combination thereof is further determined based on an expected time to charge, an expected energy level to charge, an expected energy level for maintaining the battery temperature in the battery temperature operating range.
Example embodiment 11:
   The method of embodiment 1, further comprising:
   determining that a current temperature of the battery is within the battery temperature operating range,
   wherein the charging time windows is determined so that charging of the battery is initiated before the current temperature falls outside of the battery temperature operating range.
Example embodiment 12:
   The method of embodiment 1, wherein the charging time window, the charge point, or a combination thereof is determined further based on an expected start of a next travel event.
Example embodiment 13:
   The method of embodiment 1, wherein the charge point is part of a charge network comprising at least one other charge point, and wherein the at least one other charge point serves at least one other electric vehicle.
Example embodiment 14:
   The method of embodiment 13, wherein the charging time window, the charge point, or a combination thereof is further determined based on at least one of:
   battery data associated with the at least one other electric vehicle;
   another charging time window determined for the at least one other electric vehicle; or
   another environmental condition at the at least one other charge point.
Example embodiment 15:
   An apparatus comprising:
   at least one processor; and
   at least one memory including computer program code for one or more programs,
   the at least one memory and the computer program code configured to, with the at least one processor, cause the apparatus to perform at least the following,
   receive a request to charge a battery of an electric vehicle at a charge point;
   determine a battery temperature operating range for the battery;
   determine a battery temperature function that predicts a battery temperature of the battery based on an environmental condition at the charge point;
   determine a charging time window for charging the battery based on the battery operating range and the battery temperature function; and
   provide the charging time window as an output.
Example embodiment 16:
   The apparatus of embodiment 15, wherein the apparatus is further caused to:
   determine a temperature regulating time period for the battery, the charge point, or a combination thereof before charging based on the battery temperature, the environmental condition at the charge point, or a combination thereof, wherein the battery, the charge point, or a combination thereof is cooled down or heated up to a battery temperature charging range during the temperature regulating time period; and
   select the charge point by using the battery temperature function to predict that the environmental condition of the charge point is expected to result in the battery temperature charging range during or after the temperature regulating time period, in the battery temperature being in the battery temperature operating range during, before, or after the charging time window, or a combination thereof.
Example embodiment 17:
   The apparatus of embodiment 15, wherein the apparatus is further caused to:
   determine the environmental condition based on a temperature sensor associated with the charge point.
Example embodiment 18:
   A non-transitory computer readable storage medium including one or more sequences of one or more instructions which, when executed by one or more processors, cause an apparatus to at least perform:
   receiving a request to charge a battery of an electric vehicle at a charge point;
   determining a battery temperature operating range for the battery;
   determining a battery temperature function that predicts a battery temperature of the battery based on an environmental condition at the charge point;
   determining a charging time window for charging the battery based on the battery operating range and the battery temperature function; and
   providing the charging time window as an output.
Example embodiment 19:
   The non-transitory computer readable storage medium of embodiment 18, wherein the apparatus is caused to further perform:
   determining a temperature regulating time period for the battery, the charge point, or a combination thereof before charging based on the battery temperature, the environmental condition at the charge point, or a combination thereof, wherein the battery, the charge point, or a combination thereof is cooled down or heated up to a battery temperature charging range during the temperature regulating time period; and
   selecting the charge point by using the battery temperature function to predict that the environmental condition of the charge point is expected to result in the battery temperature charging range during or after the temperature regulating time period, in the battery temperature being in the battery temperature operating range during, before, or after the charging time window, or a combination thereof.
Example embodiment 20: The non-transitory computer readable storage medium of embodiment 18, wherein the apparatus is caused to further perform:
   determining the environmental condition based on a temperature sensor associated with the charge point.

## Claims

1. A method comprising:
receiving a request to charge a battery of an electric vehicle at a charge point;
determining a battery temperature operating range for the battery;
determining a battery temperature function that predicts a battery temperature of the battery based on an environmental condition at the charge point;
determining a charging time window for charging the battery based on the battery operating range and the battery temperature function; and
providing the charging time window as an output.

2. The method according to claim 1, further comprising:
determining a temperature regulating time period for the battery, the charge point, or a combination thereof before charging based on the battery temperature, the environmental condition at the charge point, or a combination thereof, wherein the battery, the charge point, or a combination thereof is cooled down or heated up to a battery temperature charging range during the temperature regulating time period; and selecting the charge point by using the battery temperature function to predict that the environmental condition of the charge point is expected to result in the battery temperature being in the battery temperature charging range during or after the temperature regulating time period, in the battery temperature operating range during, before, or after the charging time window, or a combination thereof.

3. The method according to claim 1 or 2, further comprising:
determining the environmental condition based on a temperature sensor associated with the charge point.

4. The method according to any one of claims 1 to 3, further comprising:
determining the environmental condition based on a map label associated with the charge point in a geographic database, wherein in particular the map label indicates whether the charge point is located indoors, roofed, exposed, or outdoors.

5. The method according to any one of claims 1 to 4, wherein the environmental condition is determined based on weather data associated with the charge point.

6. The method according to any one of claims 1 to 5, further comprising:
determining a current battery temperature of the battery at the time of the request,
wherein the charging time window, the charge point, or a combination thereof is determined based on using the battery temperature function to predict when or where the current battery temperature will be in the battery temperature operating range during, before, or after the charging time window.

7. The method according to any one of claims 1 to 6, wherein the charging time window, the charge point, or a combination thereof is determined further based on a current state of charge of the battery, an expected required range until a next charge opportunity, a next charge point on route, or a combination thereof.

8. The method according to any one of claims 1 to 7, further comprising:
configuring the charge point to provide a charging capability to the electric vehicle only during the charging time window.

9. The method according to any one of claims 1 to 8, wherein the charging time window, the charge point, or a combination thereof is further determined based on an expected time to charge, an expected energy level to charge, an expected energy level for maintaining the battery temperature in the battery temperature operating range.

10. The method according to any one of claims 1 to 9, further comprising:
determining that a current temperature of the battery is within the battery temperature operating range,
wherein the charging time windows is determined so that charging of the battery is initiated before the current temperature falls outside of the battery temperature operating range.

11. The method according to any one of claims 1 to 10, wherein the charging time window, the charge point, or a combination thereof is determined further based on an expected start of a next travel event.

12. The method according to any one of claims 1 to 11, wherein the charge point is part of a charge network comprising at least one other charge point, and wherein the at least one other charge point serves at least one other electric vehicle.

13. The method according to claim 12, wherein the charging time window, the charge point, or a combination thereof is further determined based on at least one of:
battery data associated with the at least one other electric vehicle;
another charging time window determined for the at least one other electric vehicle; or
another environmental condition at the at least one other charge point.

14. An apparatus comprising means for performing the method according to any of the claims 1 to 13.

15. A computer program product comprising instructions which, when the program is executed by a computer, cause the computer to perform the method according to any one of claims 1 to 13.
